# DEMANDE DE BREVET EUROPEEN

(11) **EP 0 539 255 A1**
(43) Date de publication de la demande: **28.04.1993**
(21) Numéro de dépôt: 92402718.8
(22) Date de dépôt: 06.10.1992
(51) Int. Cl.: G01S 17/88, G01S 17/42, G01S 7/48

(54) **Procédé d'évitement des collisions entre aéronefs, et ensemble optique embarqué destiné à sa mise en oeuvre**

(30) Priorité: 18.10.1991 FR 9112884
(71) Demandeur: THOMSON-CSF, 75008 Paris (FR)
(72) Inventeur: Defour, Martin, Thomson-CSF, F-92045 Paris la Défense (FR); Grossman, Benoist, Thomson-CSF, F-92045 Paris la Défense (FR)
(74) Mandataire: Lincot, Georges

(57) **Abrégé**

Le procédé d'évitement des collisions entre aéronefs consiste :
- à émettre à partir d'un aéronef équipé de moyens d'émission-réception optique à grand champ, un rayonnement monochromatique balayant l'espace autour de l'aéronef et définir ainsi une zone de proximité,
- à recevoir, le rayonnement optique éventuellement renvoyé après rétroréflexion par des menaces constituées par d'autres aéronefs entrés dans la zone de proximité,
- et à détecter le rayonnement reçu, puis à traiter le signal correspondant pour en déduire la direction et éventuellement la distance de la menace.

L'invention s'applique particulièrement à l'anti-collision entre porteurs non coopératifs.

## Description

L'invention se rapporte au domaine du trafic aérien et a plus particulièrement pour objet un procédé d'évitement des collisions pour des aéronefs et l'ensemble optique à embarquer sur les aéronefs destiné à sa mise en oeuvre.

La nécessité pour des aéronefs de pouvoir évoluer dans des conditions de faible visibilité ou dans des zones de trafic dense rend nécessaire l'utilisation de systèmes permettant d'éviter les collisions.

Des systèmes "anti-collision" utilisant des transmissions par radio ou des ondes radars ont été développés.

Des systèmes dits "TCAS" (pour "traffic Alert and Collision Avoidance Systems") mettent eu oeuvre des interrogateurs au sol et des transpondeurs portés par des aéronefs susceptibles de répondre en fonction des interrogations, en ajoutant éventuellement à leur code de réponse des informations relatives par exemple à leur altitude. Ces systèmes, de type radar de surveillance secondaire, sont des systèmes compliqués, de coût très élevé.

D'autres types de systèmes ont été développés utilisant des procédures de communication par ondes radio et nécessitant donc des dialogues radio pour la localisation des menaces. Ces systèmes, outre leur complexité, ne permettent pas d'obtenir les réponses rapides indispensables en cas de risque de collision, et sont sujets, pour certains, aux aléas de la transmission dans certaines conditions particulières, évanouissement, échos etc...

L'invention a pour objet un procédé d'évitement des collisions, simple et à réponse rapide, pour des aéronefs, ne nécessitant pas de réponse de la part des aéronefs voisins présentant un risque de collision, et ne nécessitant pas à bord des autres aéronefs un quelconque système de réponse adapté.

Selon l'invention, un procédé d'évitement des collisions entre aéronefs, est caractérisé en ce qu'il consiste :
- à émettre à partir d'un aéronef équipé de moyens d'émission-réception optique à grand champ, un rayonnement monochromatique balayant l'espace autour de l'aéronef et définir ainsi une zone de proximité,
- à recevoir, le rayonnement optique éventuellement renvoyé après rétroréflexion par des menaces constituées par d'autres aéronefs entrés dans la zone de proximité,
- et à détecter le rayonnement reçu, puis à traiter le signal correspondant pour en déduire la direction et éventuellement la distance de la menace.

L'invention a également pour objet un ensemble optique destiné à être embarqué sur les aéronefs, pour la mise en oeuvre de ce procédé d'évitement des collisions.

L'invention sera mieux comprise et d'autres caractéristiques apparaîtront à l'aide de la description qui suit en référence aux figures annexées.
- Les figures 1a et 1b sont des schémas illustrant la couverture de la zone de proximité l'un aéronef dans un mode de mise en oeuvre du procédé selon l'invention ;
- La figure 2 illustre un mode de réalisation du dispositif d'émission-réception optique placé à bond des aéronefs.

Comme indiqué ci-dessus, le procédé d'évitement des collisions utilise des moyens d'émission-réception d'ondes lumineuses monochromatiques impulsionnelles, à grand débattement, et le procédé consiste à effectuer une télémétrie courte portée répétée un grand nombre de fois pou couvrir tout l'espace définissant une zone de proximité autour le l'aéronef porteur. Un rayonnement optique réfléchi par un aéronef entré dans la zone de proximité de l'aéronef équipé sera détecté par les moyens d'émission-réception et la direction de la menace sera obtenue du même coup.

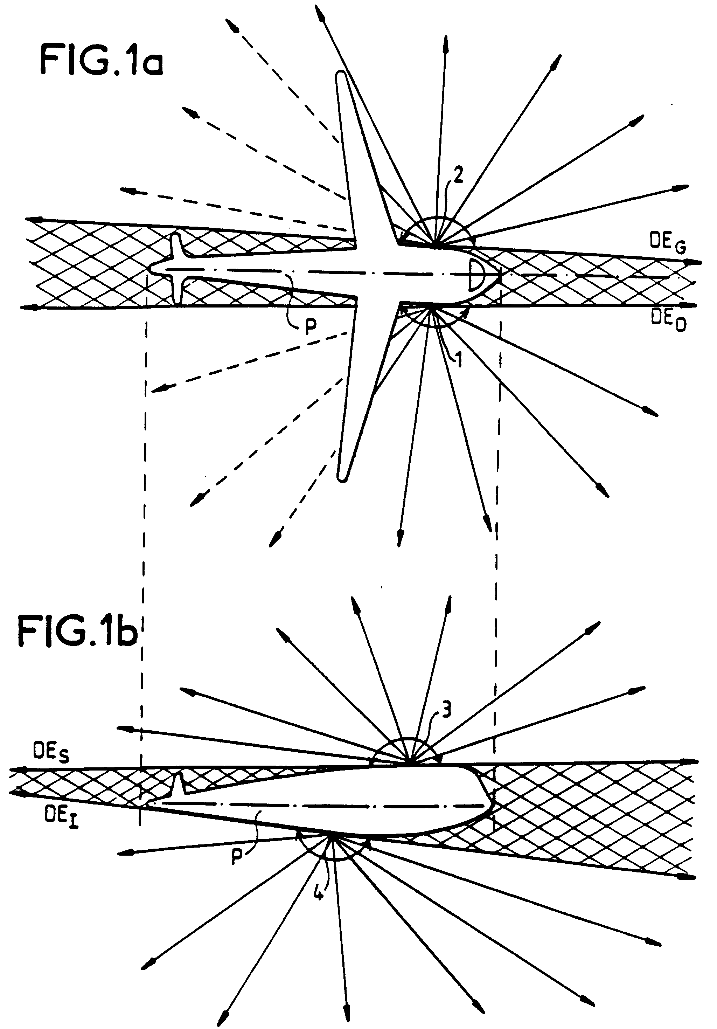

Pour cela, dans un mode de réalisation, chaque aéronef est équipé au moins de deux systèmes émission-réception optiques placés symétriquement de part et d'autre du porteur, et chacun susceptible de couvrir 2¶ stéradians Les figures 1a et 1b illustrant comment peut être couvert pratiquement l'ensemble de la zone de proximité d'un porteur P. Sur la figure 1a qui représente en coupe le porteur dans le "plan" des ailes, deux systèmes d'émission-réception optiques 1 et 2 ont été placés symétriquement de part et d'autre du plan de symétrie du porteur P ; les axes optiques n'étant pas tout à fait parallèles, les demi-espaces DE_{D} à droite et DE_{G} à gauche se recouvrent vers l'avant mais laisse un dièdre d'ombre dont le sommet est à faible distance devant le nez de l'aéronef, et qui s'élargit vers l'arrière. De plus les ailes créent une petite zone d'ombre dans ces demi-espaces, assez peu gênante du fait du faible volume occulté et du fait que les porteurs se déplacent.

Sur la figure 1b qui représente en coupe le porteur dans son plan vertical, deux systèmes d'émission-réception optiques 3 et 4 ont été placés à proximité des points haut et bas de l'avion pour couvrir respectivement les demi-espaces supérieur et inférieur, DE_{S} et DE_{I}. Comme sur la figure 1a leurs axes optiques étant décalés angulairement, un dièdre d'ombre est défini dont le sommet est à faible distance de l'arrière du porteur et qui s'ouvre vers l'avant.

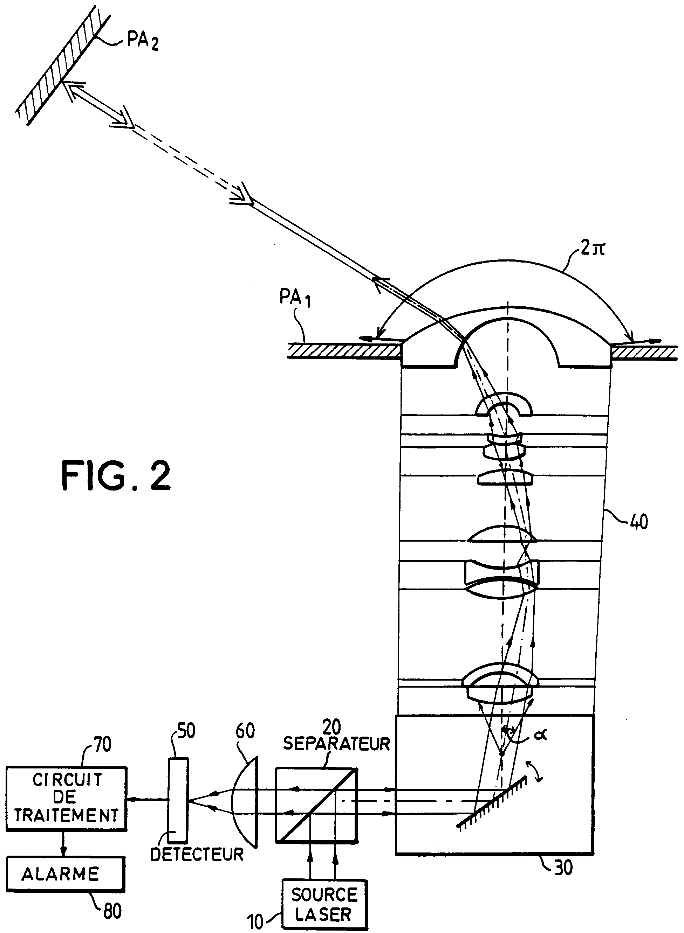

Suivant les types l'avions, suivant les zones possibles pour l'implantation des systèmes d'émission-réception optiques, et éventuellement en considérant d'autres critères utiles, un ensemble optique complet pour un aéronef pourra comporter :
- seulement deux systèmes comme représenté sur l'une ou l'autre des figures 1a et 1b,
- trois systèmes, par exemple les deux systèmes illustrés sur la figure 1a et un système complémentaire placé dans la queue de l'avion pour couvrir le cône d'ombre illustré sur la figure 1a, ou les deux systèmes illustrés sur la figure 1b et un système complémentaire placé dans le nez de l'avion pour couvrir le dièdre d'ombre illustré sur la figure 2b Une telle configuration permet une couverture complète de la zone de proximité ;
- plus de trois systèmes, et notamment 4, pour assurer une couverture complète de la zone de proximité avec une éventuelle redondance. Une configuration de ce type, à plus de trois systèmes peut également permettre de couvrir toute la zone de proximité même si le débattement de chaque système est inférieur à 2¶ stéradians.

En effet comme il sera expliqué ci-après chaque système émission-réception peut être de coût peu élevé.

Un mode de réalisation du dispositif optique d'émission-réception monté à bord des aéronefs est représenté en coupe sur la figure 2.

Pour l'émission, il comporte une source laser 10 de cadence 10 KHz par exemple, et de puissance crête de l'ordre de 10 KW par exemple. Le rayonnement issu de la source laser est reçu par une optique de séparation, séparation par polarisation ou lame semi-transparente, qui transmet le faisceau issu de la source laser à un bloc de déflexion 30. Ce bloc de déflexion est par exemple un miroir du type galvanométrique, qui permet de balayer à la sortie un demi-angle, α , de l'ordre de 320 milliradians par exemple. Le faisceau laser issu du bloc de déflexion est transmis à un objectif afocal grand champ 40 qui permet à partir de la déviation sur 320 mRad à la sortie du bloc de déflexion de balayer tout l'espace sur 2¶ stéradians. Avec les valeurs indiquées ci-dessus, un grandissement de 5 permet de couvrir les 2¶ stéradians, la voie d'émission est ainsi complètement définie.

Pour la réception, le rayonement réfléchi est reçu par le même objectif afocal 40 qui revoie le rayonnement reçu vers les moyens de séparation de faisceux 20, le faisceau reçu étant transmis en direction d'un détecteur 50. Le détecteur photosensible 50 peut être du type photodiode, dispositif à transfert de charge ou matrice de photodiodes et, pour une meilleure détection, un objectif de focalisation 60 permet de focaliser le rayonnement réfléchi par une menace sur le détecteur 50 placé au plan de l'image formée par l'objectif 40. La zone photosensible du détecteur est adaptée à la longueur d'onde d'émission de la source utilisée dans le dispositif d'émission Le signal détecté est traité dans un circuit de lecture et de traitement 70 relié à une alarme 80.

Le fonctionnement du système à partir d'un ensemble d'émission-réception porté par un premier aéronef dont on a représenté la "peau" PA₁ est le suivant. L'équipement reçoit en retour, lors du balayage du champ couvert un rayonnement réfléchi par un second aéronef dont on a représenté la "peau" PA₂. Ce second aéronef peut lui aussi comporter un ensemble analogue mais peut également en être dépourvu. Dans ce cas seul l'aéronef équipé détectera une menace existant dans sa zone de proximité. L'autre ensemble émission-réception porté par l'aéronef PA₁ pour couvrir l'ensemble du champ n'a pas été représenté sur la figure 2. Le système fonctionne de la manière suivante : l'aéronef en état de veille émet à partir des sources lasers de ses dispositifs d'émission des faisceaux étroits qui balayent l'espace couvert par chacun de ces dispositifs d'émission, à une cadence prédéterminée et délimitent de cette façon une zone de proximité dont le rayon est la limite de portée du système optique. Dès qu'un autre aéronef par exemple l'aéronef dont on a représenté la "peau" PA₂ pénètre dans la zone de proximité du premier ainsi définie, le faisceau laser émis sera, dans une position particulière du faisceau de balayage, (ou un ensemble de positions), réfléchi par l'aéronef PA₂. Le rayonnement laser réfléchi est détecté par les moyens de réception de l'équipement prévus à cet effet sur l'aéronef PA₁. L'instant de détection du rayonnement réfléchi par la menace constituée par l'aéronef PA₂ permet de donner la direction dans laquelle se trouve cette menace. La phase de veille est alors terminée et le porteur qui a détecté a menace peut alors entrer dans une phase active visant à écarter cette menace par exemple par des modifications de trajectoire.

Pour cela les dispositifs d'émission-réception peuvent être complétés par des dispositifs de modulation et une chronométrie peut être mise en oeuvre pour déduire des temps d'émission-réception, la distance de la menace comme cela est classiquement fait dans la télémétrie.

Un tel système détecte les aéronefs présents dans la zone d'abordage sans intervention de ces aéronefs. Toutefois il peut y avoir des cas dans lesquels la réflectivité de la menace est trop faible pour que cette menace puisse être détectée par une simple réflexion du rayonnement laser balayant l'espace sur le fuselage. Il est possible d'envisager d'améliorer la "visibilité" des menaces constituées par l'ensemble des aéronefs sans que ceux-ci soient équipés de dispositifs optiques d'émission-réception, simplement en prévoyant un revêtement spécial placé sur le corps de l'appareil qui améliore sa réflectivité, ou un dispositif particulier présentant une grande surface équivalente laser (ou "SEL" selon la terminologie classiquemet utilisée).

Dans un mode de réalisation, les éléments suivants ont été choisis pour constituer le dispositif d'émission-réception :
- l'émission est effectuée par une source laser de cadence 10 KHz et de puissance crête 10 KW, la demi-divergence du faisceau en sortie de cette source étant de l'ordre de 20 milliradians. L'objectif afocal grand champ utilisé pour l'émission du faisceau est constitué d'un ensemble de 10 éléments optiques comme représenté sur la figure 1, où le support n'a pas été montré, pour une transmission évaluée à 0,8.

En ce qui concerne la réception le détecteur est muni d'un filtre interférentiel et sa sensibilité a été évaluée à 10⁻⁹ watts, ce détecteur étant un détecteur du type à avalanche. Pour un tel système appliqué à la détection d'une menace dont la surface équivalente laser (SEL) éventuellemernt amplifiée, vaut 1000 m², et dans des conditions de transmission atmosphérique telle que la transmission soit de 0,8 pour un kilomètre (c'est-à-dire dans de bonnes conditions météorologiques), le système a une portée de 1300 mètres.

Avec des conditions météorologiques défavorables, c'est-à-dire une transmission de 0,1 pour un kilomètre (conditions météorologiques particulièrement critiques) le système tel que décrit ci-dessus a une portée de 850 mètres. Avec les valeurs indiquées tout l'espace est scruté en deux secondes.

## Revendications

1. Procédé d'évitement les collisions entre aéronefs, caractérisé en ce qu'il consiste :
- à émettre à partir d'un aéronef équipé le moyens d'émission-réception optique à grand champ, un rayonnement monochromatique balayant l'espace autour de l'aéronef et définir ainsi une zone de proximité,
- à recevoir, le rayonnement optique éventuellement renvoyé après rétroréflexion par des menaces constituées par d'autres aéronefs entrés dans la zone de proximité,
- et à détecter le rayonnement reçu, puis à traiter le signal correspondant pour en déduire la direction et éventuellement la distance de la menace.

2. Procédé selon la revendication 1, caractérisé en ce que l'émission est une émission laser.

3. Ensemble optique destiné à être embarqué sur un aéronef, pour la mise en oeuvre du procédé d'évitement selon l'une des revendications 1 et 2, caractérisé en ce qu'il comporte n dispositifs optiques d'émission- réception grand champ, n supérieur ou égal à 2, disposés sur l'aéronef, chacun émettant un faisceau laser commandé pour balayer une portion de l'espace autour de l'aéronef, les portions d'espace balayées étant telles qu'au cours du balayage toutes les directions de l'espace autour de l'aéronef soient scrutées.

4. Ensemble optique selon la revendication 3, caractérisé en ce que chaque dispositif d'émission-réception optique comporte :
- une source lumineuse monochromatique (10),
- des moyens de déflexion (30) pour défléchir le faisceau dans un cône de demi-angle α,
- des moyens optiques grand champ (40) destinés à effectuer à partir du balayage par les moyens de déflexion, le balayage de la portion d'image autour l'aéronef surveillée par ce dispositif,
- et, entre la source lumineuse (10) et les moyens de déflexion (30), des moyens de séparation (20) pour diriger le rayonnement reçu en retour par l'objectif vers des moyens le détection (50, 60), eux-mêmes couplés à des moyens de traitement et d'alarme (70, 80).

5. Ensemble optique selon la revendication 4, caractérisé en ce que les moyens optiques grand champ sont constitués par un objet afocal grand champ qui transforme le balayage du cône de demi-angle α à la sortie des moyens de déflexion en un balayage dans un demi-espace à sa sortie.

6. Ensemble optique selon la revendication 5, caractérisé en ce que les moyens le déflexion sont formés par un miroir galvanométrique.

7. Ensemble optique selon l'une des revendications 3 à 6, caractérisé en ce que les moyens de détection comportent un objectif le focalisation du rayonnement reçu (60) et un détecteur (50) placé au plan focal de l'objectif de focalisation, et sensible à la longueur d'onde de la source (10).
